# EUROPEAN PATENT SPECIFICATION

(11) **EP 3 041 184 B1**
(45) Date of publication and mention of the grant of the patent: **27.12.2017**
(21) Application number: 14200500.8
(22) Date of filing: 29.12.2014
(51) Int. Cl.: H04L 29/06, H04N 21/6373, H04N 21/6375

(54) **Controlling transmission of data over a lossy transmission path to a client**
Steuerung der Übertragung von Daten über eine verlustbehaftete Übertragungsstrecke zu einem Client
Commande de transmission de données sur une voie de transmission avec perte à un client

(43) Date of publication of application: 06.07.2016
(73) Proprietor: Koninklijke KPN N.V., 2516 CK The Hague (NL)
(72) Inventor: Casal Gomez, Alejandro, 2492 VX The Hague (NL)
(74) Representative: Wuyts, Koenraad Maria

(56) References cited:
- EP-A1- 2 375 633
- WO-A1-2014/160553
- US-A1- 2008 253 369
- US-A1- 2009 135 898
- US-A1- 2014 351 638

## Description

### Field of the invention

The invention relates to controlling transmission of data to a client, and, in particular, though not exclusively, to a method for controlling transmission of media data over a lossy transmission paths to media rendering devices, a media client for controlling transmission of media data and a computer program product for implementing such method.

### Background of the invention

With the growing popularity of Internet TV (IPTV), there is an increasing need for advanced media services, such as live video streaming applications, that allows continuous playback and best user experience. Typically, services such as IPTV multicast or unicast services are provided through a managed IP network environment that uses high bandwidth networks in order to enable high data transmission rates that are needed for such services. The managed network should be able to deliver services that can guarantee a certain Quality of Services (QoS) and Quality of Experience (QoE) that is experienced by the consumer. One particular cost efficient network topology for deploying such services is a combination of an optical fibre back-bone, e.g. a fibre-to-node network, and a conventional copper-based (twisted-pair) access network for connecting the fibre back-bone to the home equipment. Very high bitrate DSL techniques such as VDSL2 and VDSL2+ may be used to transmit data over the copper lines. When using high data transmission techniques over a twisted pair copper lines so-called impulse noise becomes a main issue. In addition, at the customer premises, transmission through the so called 'in-house' network which starts after the DSL adapter, which may comprise dedicated fixed (copper) cabling or wireless (e.g. wifi), or may even comprise power cables, whereby the electricity is used as a carrier signal, may be especially sensitive to impulse noise.

Impulse noise may be classified in Repetitive Electrical Impulse Noise (REIN) that has a duration of about 1 ms or less, Prolonged Electrical Impulse Noise (PEIN) that has a duration between 1 ms and 10 ms and Single Isolated Impulse Noise (SHINE) that has a duration longer than 10 ms. Impulse noise may seriously degrade the QoE of a customer. Impulse noise may occur in (random) broadband bursts and is commonly generated by household equipment (TVs, dimmers, thermostats, etc.), power sources, transformers, and environmental conditions, e.g. thunderstorms. The impulse noise may introduce bit errors in the bitstream that result in corrupted media packets being received by a media rendering device (e.g. a television). Hence, impulse noise will cause corrupted packets and even packet loss which need not be due to a bandwidth bottleneck in the network. E.g. these phenomena may occur even while the data connection as such has sufficient bandwidth for high bitrate data transmission.

Using DSL as transmission technique on the access line (subscriber line) in principle allows configuring the subscriber line between the DSLAM in an operator network and the DSL modem at the customer premises such that it is less sensitive to changing conditions due to e.g. noise and cross-talk. For example, TR-176 "ADSL2Plus Configuration guidelines for IPTV" describes the use of DSL profiles for configuring parameters that control data transmission between the DSLAM and the DSL modem. For example, a DSL profile may be used to set a fixed minimum bitrate (minimum bandwidth) for managed services (e.g. IPTV and VOIP) over the DSL line and to assign the rest of the available bandwidth to best effort services (e.g. Internet) and/or data traffic due to error repair techniques such as forward error correction (FEC) and/or automatic retransmission request (ARQ) techniques.

In case the subscriber line is deployed at a bitrate in excess of the minimum bitrate for managed services, seamless rate adaptation (SRA) may be used in order to optimize the best effort services in response to slowly varying noise on the subscriber line. One of the problems with SRA however is that changes made in parameters of a DSL profile (such as a bitrate change) will directly affect any upstream QoS, traffic shaping, and policy management system. Hence, in order to make use of SRA, all systems affected by the changed bitrate need to be (automatically) updated with the current (changed) bitrate so they use the correct information for managing the QoS in the network. Furthermore, although SRA is beneficial in coping with slowly fluctuating line conditions due to for example cross talk or RF interference, it cannot handle large rapid changes in noise conditions, such as in the case of impulse noise.
SRA operates on the level of capacity of the DSL line. Some services, such as IPTV, Video-on-Demand (VoD), have fixed bitrates. Thus if the total capacity of the DSL line is decreased using SRA to a level below the fixed rate of a service, the QoE may actually worsen rather than improve.

DSL further offers dynamic line management (DLM) that enables automatic adaptation of the DSL profile in response to changes in the noise environment. This way the DSL profile can be changed without disconnecting the DSL connection. DLM allows changes of the so-called minimum impulse noise protection (INP) parameter, which effectively increases the amount of information in the packets that is used by an FEC error correction algorithm of the DSL modem in order to make data transmission more robust with respect to impulse noise on the subscriber line. The problem with DLM however is that changes in the profile will cause loss of service in the order of minutes. Furthermore, increasing the INP parameter will have a significant impact on the effective bandwidth available for a service and thus cannot be arbitrarily increased in response to impulse noise bursts without affecting the bandwidth that is reserved for managed services. Increasing the INP too much may simply cause the required bandwidth for a service to exceed the available bandwidth on the DSL line, thus leading to a further deterioration of the QoE. Finally increasing the INP parameter will also significantly impact the required buffer capacity, especially on the media rendering device.

Hence, from the above it follows that DSL provides some measures to reduce the effect of impulse noise on the subscriber line. These measures however have a large impact on either the available bandwidth and continuity in the delivery of the services. Furthermore, they are limited to only a small part of the access network (i.e. the DSL line) and thus cannot deal with parts of the home network which can be very sensitive to impulse noise (e.g. due to power transmission lines and/or low-quality cabling).

In order to address the above-identified problems with impulse noise, packet repair schemes are developed on an application level. For example, Li et al., describe in their article "Forward and retransmitted systematic lossy error protection for IPTV video multicast" 17th International Packet Video Workshop, 11-12 May 2009. Seattle, USA, an application-level packet repair system wherein forward error correction (FEC) and automatic retransmission request (ARQ) techniques are used that allow a media client in e.g. a IPTV set-top box (STB) to repair corrupted packets or lost packets during media playback.

Typically a retransmission server will need to send retransmission packets to the media client at a certain bitrate so that retransmission packets can be received in time (e.g. before their expected rendering time) in order to be processed by the client along with the other packets in the stream. If however the amount of bit errors per unit of time increases above a certain value, not all retransmission packets will be received in time by the media client. Increasing the buffer size of the client can only alleviate this problem to some extent, as a (too) large buffer will negatively influence the latency and the zapping speed. And furthermore buffers are costly and its maximum size in the media rendering device may be capped to a level that is simply insufficient.

Hence, when a bit error rate suddenly spikes due to for instance impulse noise, part of the corrupted packets or lost packets (e.g. those with bit errors or those that never arrived at the client) can no longer be repaired. Whenever a bit error occurs (e.g. a checksum error or an RTP sequence discontinuity) the client may drop a packet on the IP layer level. As a single IP packet may comprise a plurality (typically seven) MPEG packets, the dropped packet may result in an defected frame or a frame loss which is directly visible for the user in the form one or more glitches (e.g. visual artefacts such as IPTV pixelizations) in an image or even a complete freeze of the image, for example in case (part of) an 1-frame is dropped. As the required speed of data delivery of (managed) services, such as IPTV, is rapidly increasing from 3 Mbps for SDTV to 30 Mbps and higher for next generation media formats, the problem of packet loss and associated frame loss becomes increasingly important.

Hence, there is a need in the art for improved methods and systems for data transmission that allow reduction of detrimental effects of impulse noise. In particular, there is a need in the art for methods and systems for mitigating detrimental effects of impulse noise while minimizing the effect on the QoE.

Document D1, US 20140351638 A1, discloses a system and method for streaming data, whereby the system includes: instructions that: encode a data stream at a first bitrate; transmit a plurality of first data blocks to a receiver, each of the first data blocks including: a first source packet corresponding to the encoded data stream; and a first repair packet; and transmit a plurality of second data blocks to the receiver for a first predetermined period of time, each of the second data blocks including: a second source packet corresponding to the encoded data stream; a second repair packet; and a probing packet.

Document D2, WO 2014160553 A1, discloses technology to provide quality of experience aware multimedia streaming. In an example, a server operable to provide hyper-text transfer protocol (HTTP) adaptive streaming, can include computer circuitry configured to: determine a bandwidth available to the server for transmitting HTTP adaptive streaming content to a plurality of clients; receive HTTP requests from the plurality of clients for representations offered by the server in a manifest file for the HTTP adaptive streaming; and calculate an availability of each representation that is offered in the manifest file for the server. The availability can be calculated, at least in part, based on the determined bandwidth. The availability of each representation can be communicated from the server to the plurality of clients.

### Summary of the invention

It is an objective of the invention, which is defined by the independent claims together with their dependent claims, to reduce or eliminate at least one of the drawbacks known in the prior art. In one aspect the invention may relate to a method for controlling transmission of media data to a media rendering device.

In an embodiment, the method may include receiving media packets of a first media stream, wherein media packets in said media stream that are lost or corrupted during said transmission are recovered by a packet repair system; receiving or determining a quality of experience parameter associated with said first stream, said quality of experience parameter being based on packet repair information, said packet repair information being indicative of an amount of corrupted media packets per time period that is not recovered by said packet repair system; requesting transmission of a second media stream over said lossy transmission path to said media client, if said quality of experience parameter indicates that a quality of experience of said rendered first media stream is below a predetermined threshold, said second stream being a lower quality version of said first media stream; and, switching from receiving packets of said first stream to receiving packets of said second media stream.

In another embodiment, the method may include: a media client of a media rendering device receiving media packets associated with a first media stream, said media packets being part of a transmission over a lossy transmission path to said media client, whereby at least a part of said media packets that are lost or corrupted during said transmission are being recovered by a packet repair system; said media client receiving or determining a quality of experience parameter associated with said first media stream, said quality of experience parameter being based on packet repair information, at least part of said packet repair information being determined by said client and being indicative of an amount of said media packets that is not recovered timely enough by said packet repair system in order to be used in the rendering of media packets of said first media stream, said quality of experience parameter correlating with an amount of corrupted video parts, preferably video frames, and/or corrupted audio samples, of said first media stream, wherein said amount of corrupted video parts is generated within a period of time as part of said rendering; said media client requesting transmission of a second media stream over said lossy transmission path to said media client, if said quality of experience parameter indicates that a quality of experience of said rendered first media stream is below a predetermined threshold, wherein said second stream is a lower quality version of said first media stream; and, said media client switching from receiving packets of said first stream to receiving packets of said second media stream.

In an alternative embodiment, said quality of experience parameter is not received or determined by the media client. Instead it is received or determined by a network element in charge of providing the first and second media stream. In that case, instead of the client requesting the second media stream according to the invention, the network element may start providing (e.g. push) the second media stream if said quality of experience parameter indicates that a quality of experience of said rendered first media stream is below a predetermined threshold, wherein said second stream is a lower quality version of said first media stream, and the network element may interrupt the providing of the first media stream. In an embodiment the first stream is a unicast stream, preferably a Video on Demand stream, and/or the second stream is a unicast stream.

The invention allows control, in particular control of the quality of experience (QoE), of media data rendering processes in media transmission networks comprising a packet repair system. Access networks of media transmission networks, such as copper-based access networks, DSL subscriber lines and domestic wired and wireless networks (e.g. wifi based, or domestic power line based data transmission networks) are particularly sensitive to impulse noise, e.g. repetitive electrical impulse noise (REIN), prolonged electrical impulse noise (PEIN) and a single high level impulse noise event (SHINE), which causes corrupted media packets or packet losses. These networks and transmission lines thus will form lossy data transmission paths (e.g. data transmission paths sensitive to impulse noise) between a media source providing a (multi) media stream and one or more media rendering devices receiving the (multi) media stream. Especially at very high bitrates the impulse noise may seriously degrade the Quality of Experience (QoE) that is perceived by the user.

Impulse noise may trigger a packet repair (recovery) scheme such as packet retransmission of the corrupted and/or lost media packets. However, if the packet repair system of the managed media transmission system (e.g. a packet retransmission scheme and/or, optionally, a forward error correction (FEC) scheme) can no longer properly (e.g. before their intended/expected rendering time) repair (recover) lost or damaged packets, the client is forced to drop media packets during the rendering. Such packets that are skipped (not rendered) by the client during rendering of the content may be referred to as dropped packets. In the process of decoding, the dropped packets are thus logically not available for use by the media client, so that corrupted video parts e.g. corrupted video frames (i.e. video frames that miss part of the video information needed to form undistorted images during rendering) and corrupted audio samples are formed. These corrupted video parts and audio samples cause distortions in the video and the audio and thus directly affect the quality of experience.

In order to improve the quality of experience of the rendering (e.g. displaying) of data that is being received over a lossy transmission path, a quality of experience parameter is determined that correlates with an amount of corrupted frames (within a predetermined period of time or as a function of time). These frames are corrupted due to an amount of corrupted and/or lost media packets that is not recovered timely enough (i.e. not recovered before the scheduled (e.g. intended) rendering time of the media packets) by said packet repair system in order to be used in the rendering of media packets in a media stream. For the purpose of this disclosure the terms 'packet recovery' and 'packet repair' have the same meaning in the sense that these terms both refer to a timely recovery of an packet that was determined to be corrupted or lost.

Such quality of experience parameter may thus correlate with missing information in frames that directly determines/influences the (perceived) Quality of Experience. A certain QoE level may thus be represented by a quality of experience value or a range of quality of experience values of the quality of experience parameter. A change in the amount of corrupted frames may cause a change in (the value of) the quality of experience parameter and - consequently - a change in a (defined) quality of experience (level). The quality of experience parameter may be compared with a threshold value and used to request (e.g. trigger the request of) a lower quality version of a media stream if the quality of experience (e.g. the quality of experience level represented by the quality of experience parameter) is or becomes too low. In an embodiment the reverse action (upscaling to a high bitrate version when the QoE rises above a certain level, e.g. when the QoE improves) may likewise be implemented.

A lower quality version (e.g. low-bitrate version) of the media stream will cause a decrease of the part of said amount of media packets that cannot be recovered by said packet repair system before the scheduled rendering time of the media packets so that the quality of experience can be kept at, or raised back to an acceptable level even in the presence of impulse noise affecting the lossy transmission path. Because the packet repair mechanism(s) in place has/have a given (maximum) capacity (e.g. in terms of packets per unit of time 'recovered'), a larger percentage of the initially lost or corrupted packets may be 'recovered' (e.g. provided undamaged prior to their scheduled rendering time to the rendering device) in the low bitrate version than with the originally received high bitrate version of the media stream.

In this disclosure the term "provided" may relate to actually retransmitting packets being indicated as lost (e.g. never arrived) or corrupted, or may relate to the repairing by the client (through for example Forward Error Correction) of corrupted packets. Consequently this selection mechanism contributes to an improvement of the (perceived) Quality of Experience. Selecting a lower bitrate version on the basis of the mechanism outlined above may thus contribute towards increasing or at least maintaining a certain quality of experience (QoE) level.

In an embodiment, media packets may be transmitted over a lossy transmission path to said media client. The invention is particular suited for lossy data transmission paths, i.e. data transmission paths in which electromagnetic (impulse)noise may cause corruption of media packets.

In another embodiment, said corrupted media packets may include corrupted video frames and/or audio packets. In another embodiment, at least part of said packet repair information may be determined by said client.

In an embodiment, said method may further comprise switching from receiving packets of said first stream to receiving packets of a second media stream over said lossy transmission path, wherein said second stream is a low bitrate version of said first media stream.

In an embodiment, said low bitrate version stream may be selected from a plurality of bitrate versions of said media stream such that said quality of experience is raised above said threshold.

In embodiment, said media client requesting transmission of a second media stream may further comprise: using said packet repair information for determining an estimated quality of experience level for different quality versions of the media stream that are available to said media client; and, selecting said lower quality version of the media stream on the basis of said estimated quality of experience parameters and said threshold value.

Hence, the quality of experience parameter may be determined by e.g. a monitoring system, and if it indicates that the quality of experience drops below a certain threshold, e.g. a certain (minimum) QoE level, due to a burst of impulse noise (e.g. due to weather conditions) the media rendering device may be triggered to select a lower quality version of the media stream than the version which the media rendering device was processing at the moment of the QoE drop. Through switching to a lower quality version of the media stream that was initially transmitted to the media client, the quality of experience as perceived by the user of the media rendering device may be raised , preferably to an acceptable QoE level.

Although the lowering of the quality (bitrate) of the content received through the new media stream may (temporarily) cause a small change in the perceived quality by the user, severe distortion of output of media frames and even media frame freezes may be avoided or resolved. This way, the QoE can be maintained at, or raised back to a level that is acceptable for the user and if the period (e.g. the period comprising one or more bursts) of impulse noise is over, the media client may switch back to the earlier high bitrate version of the media stream.

In an embodiment, the method may further comprise:
sending said transmission request to at least one media source that is configured to transmit one or more bitrate versions of said first media stream on the basis of a point-to-multipoint transmission technique, preferably a broadcast or a multicast technique. In this embodiment, a broadcast or a multicast system may offer different bitrate versions of one stream (e.g. one TV channel) so that the media client may select a bitrate version that provides a minimum quality of experience.

In an embodiment, the method may further comprise:
sending said transmission request to at least one media source that is configured to transmit one or more bitrate versions of said first media stream on the basis of a point-to-point transmission technique, preferably a unicast transmission technique to said media client. In this embodiment, the lower bitrate versions may be offered via a separate unicast connection to the media client. Hence, in that case, the transmission control may be offered as an over-the-top service to users. In a further embodiment, the lower bitrate version may be sent on the basis of an (HTTP) adaptive streaming protocol (e.g. an HAS protocol, such as MPEG DASH) to the media client.

In an embodiment said packet repair information may further or alternatively comprise: the amount of packets that is repaired (i.e. recovered) by said packet repair system, preferably in a period of time (for example as a function of time or for a given time period); the number of retransmission requests sent by the media client to said packet repair system.

In an embodiment, a corrupted media packet may be detected on the basis of a checksum error (e.g. an UDP or IP checksum error) and/or a lost media packet may be detected on the basis of a packet counter discontinuity (e.g. an RTP sequence number discontinuity).

In an embodiment said quality of experience parameter may be determined by a monitoring system that is configured to monitor packet repair information associated with said part of an amount of media packets that cannot be recovered by said packet repair system before the scheduled rendering time of the media packets. Hence, in this embodiment, the QoE parameter may be determined by another entity than the media client, for example by an entity associated with or located in a transmission network of which the lossy transmission path may be a part. In other embodiment, the QoE parameter may be determined by the media client using the packet repair information.

In an embodiment, the monitoring system may execute a process of: determining said quality of experience parameter on the basis of packet repair information received from one or more monitoring agents connected to data lines of said access network and/or implemented in said media rendering device; sending said quality of experience parameter to the media client in said media rendering device.

In an embodiment, said packet repair information may be transmitted in one or more RTCP reports to said monitoring system and/or wherein said quality of experience parameter is transmitted in one or more RTCP reports to said media client.

In an embodiment, media packets associated with said first media stream and, optionally, said low bitrate versions of said first media stream may be transmitted to said media client on the basis of at least one of the MPEG suite of protocols, and/or the RTP protocol, and/or the UDP protocol and/or the IP protocol. In an embodiment, a digital subscriber line (xDSL) technique, preferably an ADSL2, ADSL2+, VDSL, VDSL+, or VDSL2 technique, is used for transmitting media packets over at least part of said lossy data transmission path.

In an embodiment, said lossy data transmission path may comprise comprises at least one of: a (DSL) subscriber line, a (preferably residential) powerline (such as electrical wiring in housing); and/or, a residential wired or wireless (e.g. Wi-fi, WiMax, Bluetooth) network. The invention is particularly advantageous in data transmission networks that comprise lossy data transmission paths, i.e. transmission paths that are sensitive to impulse noise. Such transmission paths may include both wired (e.g. copper-based DSL lines) as well as wireless data transmission paths (e.g. a domestic/in-house wifi-network) as well as powerlines used to transport datacommunication on top of (modulated on) the electricity transportation.

In a further aspect, the invention may relate to media rendering device that is connectable to a lossy data transmission path. The media rendering device may comprise a computer readable storage medium having computer readable program code associated with a media client embodied therewith, and a processor, preferably a microprocessor, coupled to the computer readable storage medium, wherein responsive to executing the computer readable program code, the processor is configured to perform executable operations comprising: receiving media packets associated with a first media stream, said media packets being transmitted over a lossy transmission path to said media client, at least part of said media packets that are lost or corrupted during said transmission are being recovered by a packet repair system;
receiving or determining a quality of experience parameter associated with said first stream, said quality of experience parameter being based on packet repair information, at least part of said packet repair information being determined by said client and being indicative of an amount of said media packets that is not recovered timely enough by said packet repair system in order to be used in the rendering of media packets of said first media stream, said quality of experience parameter correlating with an amount of corrupted video parts, preferably video frames, and/or corrupted audio samples, of said first media stream, wherein said amount of corrupted video parts is generated within a period of time as part of said rendering; requesting transmission of a second media stream over said lossy transmission path to said media client, if said quality of experience parameter indicates that a quality of experience of said rendered first media stream is below a predetermined threshold, wherein said second stream is a lower quality version of said first media stream; and, switching from receiving packets of said first stream to receiving packets of said second media stream.

In an embodiment, said executable operations may further comprise: switching from receiving packets of said first stream to receiving packets of a second stream over said lossy transmission path, wherein said second stream is a low bitrate version of said first media stream.

In an embodiment, said low bitrate version stream may be selected such that the quality of experience is raised above said threshold.

In an embodiment, said first and/or second media stream may be transmitted on the basis of a point-to-multipoint transmission technique, preferably a broadcast or a multicast technique, to said media client.

In another embodiment, one of said first and/or second media stream may be transmitted on the basis of a point-to-point transmission technique, preferably a unicast transmission technique, more preferably an (HTTP) adaptive streaming technique, to said media client.

In an embodiment, switching from receiving packets of said first stream to receiving packets of a second stream may comprise: leaving a first multicast group associated with said first media stream and joining a second multicast group associated with said second media stream.

In an embodiment, switching from receiving packets of said first stream to receiving packets of a second stream may comprise: tuning out of a first broadcast of said first stream and tuning into a second broadcast of said second stream.

The invention may also relate to a program product, a computer program product comprising software code portions stored in a memory, said software code portions configured for, when run by a processor, executing the method steps as described above.

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Functions described in this disclosure may be implemented as an algorithm executed by a microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non- exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object oriented programming language such as Java(TM), Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

The invention will be further illustrated with reference to the attached drawings, which schematically will show embodiments according to the invention. It will be understood that the invention is not in any way restricted to these specific embodiments.

### Brief description of the drawings

**Fig. 1** depicts schematics of at least part of a media data transmission system according to one embodiment of the invention.
**Fig. 2** depicts a monitoring system according to one embodiment of the invention.
**Fig. 3** depicts a process for controlling streaming of media data to a one or more of media rendering devices according to an embodiment of the invention.
**Fig. 4** depicts an example of a process for controlling the transmission of media data according to another embodiment of the invention.
**Fig. 5A-5C** depict various ways of packaging multimedia payload into media packets that are suitable for data delivery over various networks.
**Fig. 6** depicts a block diagram illustrating an exemplary data processing system for use in a media data transmission system as described in **Fig. 1****.**

### Detailed description

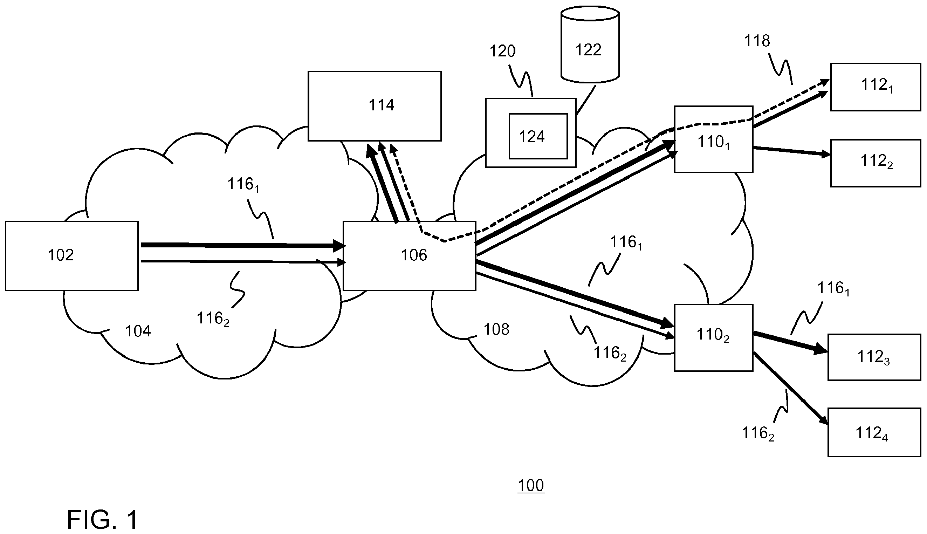

**Fig. 1** depicts schematics of at least part of a media transmission system according to one embodiment of the invention. In particular, **Fig. 1** depicts a data transmission system **100** comprising at least one core network **104** and an access network **108.** The core network may be configured for high-speed data transport and distribution. For example, in an embodiment, the core network may have a high-speed fibre-to-node architecture. Further, at least part of the access network may have a fixed copper-based architecture, comprising one or more edge nodes **110,** e.g. one or more digital subscriber line access multiplexer (DSLAMs) for providing access to individual subscriber lines. A connecting network node **106,** e.g. an aggregation router, may be used for connecting the core network the access network.

The media transmission system may further comprise one or more media sources **102** for transmitting packetized media streams, e.g. (live) TV channels, at a predetermined (first) bitrate to the media rendering devices. A media rendering device **112** may generally relate to any device that is capable of processing and rendering media data (e.g. video, voice and other data). Such devices may include devices such as an electronic tablet, a smart-phone, a notebook, a media player, a television or a set-top box. The media client is the functional unit inside the media rendering device that is involved in executing parts of the method according to the invention.

In order to provide scalable media distribution, at least part of the one or more media sources may packetize media data (e.g. content such as video, voice and/or any other media information, e.g. subtitles or metadata) in media packets and transmit the media packets to the media rendering devices on the basis of a suitable transmission technique, preferably a broadcasting technique. Here, the term broadcasting may include any suitable point-to-multipoint media distribution technique, including any form of broadcasting, webcasting, multicasting (including application-level or overlay multicasting) and/or anycasting.

For example, in an embodiment, at least part of the media sources may be implemented as one or more RTP media streaming servers configured for transmitting media packets on the basis of a multicast technique, e.g. an IP multicast technique, to the media rendering device. The media sources may be implemented as one or more IPTV, VOIP and/or VOD servers, a (IPTV) head-end or part of a content distribution network (CDN). Alternatively, for certain services, such as Video on Demand, a unicast technique may be used.

Preferably, at least part of the media transmission system of **Fig. 1** may be configured as a media transmission system, preferably a managed media transmission system, comprising a quality management system **120** configured for managing the Quality of Service (QoS) and/or the Quality of Experience (QoE) of the services that are delivered to media rendering devices. The QoS and QoE requirements may be defined on the basis of parameters and/or service level agreements (SLAs) that are stored in a quality database **122.** The quality management system may use metrics of the media transmission system and the parameters in order to control various network elements such that sufficient bandwidth for the delivery of media services can be guaranteed under different network conditions. Examples of a managed media distribution systems include a VOIP system comprising one or more VOIP application servers and an IPTV system comprising IPTV network servers and applications servers (not shown). Typically, for managed media services a fixed minimum bandwidth is reserved in order to guarantee that these services can be delivered to users in accordance with the QoS and QoE requirements.

The media rendering devices may be connected via lossy data transmission paths to edge nodes of the access network. At least part of the lossy data transmission paths may be implemented as (copper based) digital subscriber lines for connecting a digital subscriber line (DSL) modem in het media rendering device to e.g. a DSLAM in the access network. A media rendering device may further comprise a media client for supporting streaming services, preferably IP streaming services, over the lossy data transmission path.

Alternatively and/or in addition, at least part of the lossy data transmission paths between the access network and the media rendering device may be implemented as a (domestic) wired network. For example, a lossy data transmission path may relate to a powerline based data transmission path or a low-quality data connection between the modem, preferably a DSL modem and a media rendering device. The lossy data transmission path may thus relate to the part of the end-to-end connection that is not/cannot be controlled by any known DSL technique used to mitigate the effects of electromagnetic interference and/or impulse noise. Also wireless network nodes, such as wireless routers, that may be sensitive to impulse noise, may form (part of) a lossy data transmission path between the access network and a media rendering device. In case of video streaming, the media client may be configured for the use of a streaming protocol (e.g. RTP, RTSP) for receiving media packets streamed over the lossy data transmission line.

The lossy data transmission paths of the access network and of the (domestic) home network are sensitive to impulse noise which may cause substantial packet loss and bit errors at the side of the media rendering device. In order to mitigate the potential loss in Quality of Experience (QoE) as may be perceived by a user of a media rendering device during periods of high impulse noise, the media data transmission system may comprise a packet repair system for recovering lost and/or corrupted media packets. The packet repair system RET **114** may use known techniques such as forward error correction (FEC) and automatic retransmission request (ARQ) techniques in order to recover missing or corrupted media packets as detected by the media client.

For example, the packet repair system may comprise a retransmission server (RET) for retransmitting media packets upon request by the media client in a media rendering device. To that end, the retransmission server may temporarily buffer media packets that are transmitted to the media rendering devices so that when packet loss and/or corrupted media packets are detected by a media rendering device (e.g. on the basis of a checksum error and/or a sequence number discontinuity), the retransmission server is able to retransmit media packets upon request to the media rendering device. In particular, when the media client detects that a media packet is missing (e.g. a lost media packet) or that a media packet is corrupted, the client may send a request to the retransmission server for retransmitting a packet that is identified in the request. Retransmitted packets may be sent by the retransmission server to a media client in a media rendering device using e.g. a unicast connection **118** (e.g. a connection based on a unicast transmission technique).

The media client may receive and buffer packets of a certain media stream and if the media client determines during the processing of the packets that certain packets are missing or corrupted it may request the recovery system (e.g. the packet repair system) to transmit these packets. Recovery of the packets by retransmission needs to be realized before the time instance at which rendering of the packet is planned or scheduled (the scheduled rendering time). Such time instance may depend on the protocol that is used for transporting the packets to the media rendering device. For example, when using MPEG transport packets, timing information in the header field, such as the presentation timestamp (PTS), may determine when the payload of the packet should be presented (rendered). Such presentation timestamp may relate to an absolute clock time, or a relative time. Alternatively the RTP timestamp provides timing information related to the rendering of the media data comprised in the media packets. Generally speaking the timing information provides an indication for the order in which received media packets are to be rendered, e.g. an order associated with a content time line.

The recovery capacity of the packet repair system is limited, thus if the amount of bit errors and/or packet loss in a period of time increases above a certain value, the amount of packets that cannot be recovered timely enough (i.e. before their planned/scheduled processing time, preferably before their scheduled rendering time) will increase. In case a packet is not repaired (recovered) in time, the client will continue rendering the media packets while discarding (dropping) the lost or corrupted packets. This way during decoding of the packets, frames or audio samples may be formed that are corrupted, i.e. part of the media data or even the whole media data needed for generating a particular frame or audio sample is lacking (e.g. not used in the frame generation process). Such video frames or audio samples may be respectively referred to as corrupted video frames or audio samples. Depending on the type of media data that is discarded (e.g. whether the discarded information relates to a P,B frame or an I-frame of an MPEG stream), the rendered video and/or audio will comprise artefacts or may even cause a complete freeze of the video or audio so that the quality of experience (QoE) as perceived by the user is substantially degraded. At increasing data transmission rates, this problem becomes increasingly important, given the constraints posed by known data recovery systems.

Increasing the buffer size of the media client in order to try to keep the number of dropped packets below a certain level (by 'buying' more time for the recovery system) may not help sufficiently, as this could have a serious negative impact on latency and zapping speed (when zapping to another channel, first the enlarged buffer needs to be filled, before the user can 'watch'). Other than that, the buffer size may simply not be large enough to provide the extra capacity needed for the recovery system to improve the number of recovered packets. The size of buffers of certain media rendering devices (e.g. televisions) are often limited as well by design. Another alternative is to increase the data rate used by the retransmission server to send the repair data (in case of a retransmission based recovery system) to the media rendering device, but this is not always possible since the bandwidth of the access network, which is often limited, may not allow for higher bitrates on the repair data. Moreover, in practice the retransmission speed will be limited by the so-called round-trip latency, i.e. delays that are caused by events in the network, e.g. traffic congestion at bottlenecks in the network. The same problem of bandwidth constraints may be found in recovery systems based on FEC (Forward Error Correction), which requires additional bandwidth for the overhead data used in FEC. The required overhead increases with both the transmission rate of the service provided as well as the size of the distortion caused by the (impulse) noise.

During the decoding process, packets that are skipped (not rendered) by the client during rendering of the content (dropped packets) are not available for use by the media client, so that corrupted video parts e.g. corrupted video frames (i.e. video frames that miss part of the video information needed to form undistorted images during rendering) and corrupted audio samples are formed. These corrupted video parts and audio samples thus cause distortions in the video and the audio and directly affect the quality of experience. Therefore, in order to enable the media transmission system to maintain an acceptable quality of service level during periods of high impulse noise activity, a quality of experience parameter may be determined that is indicative of the perceived Quality of Experience (QoE). The QoE correlates with an amount of corrupted video parts and/or audio samples caused by corrupted or lost packets that cannot be repaired (recovered) in time by the packet repair system. This quality of experience parameter may be compared with a threshold value. In an embodiment, this threshold value may be regarded as the (maximum) amount of corrupted frames that are caused by corrupted or lost packets that cannot be repaired in time by the packet repair system. The threshold level may, in an embodiment of the invention, thus define a (minimum) quality of experience level that the system tries to maintain under all, or at least most, circumstances.

Hence, the media transmission system of **Fig. 1** may regularly or periodically determine the quality of experience parameter of media clients in order to determine a quality of experience level of the rendered media data (content). A threshold value may be used to determine when the quality of experience level has dropped below a certain acceptable quality level. In that case, the client may switch to a lower quality version of the media data provided in another media stream with a lower bitrate and continue rendering of the media data (content) on the basis of the selected lower quality version. As will be shown hereunder in more detail, selection of (e.g. switching to) a lower quality version of the media data, e.g. a lower bitrate version of the media data provided in a different media stream, will change (lower) the amount of corrupted frames - and thus change (increase) the quality of experience parameter - above the threshold value so that - despite the presence of impulse noise - a certain acceptable quality of experience level can be maintained.

The invention may be illustrated in more detail on the basis of a simple example wherein the media source **102** is configured to multicast five different qualities. Different quality variants of media streams (e.g. of media data being comprised in these different media streams) may be defined in terms of bitrates, resolutions, packet sizes, frame rates, codecs, etc. For the purpose of this invention, the term 'quality' or 'quality variant' relate both to the media stream and the media data comprised in the media stream. Hence whenever these terms are used in the context of describing a characteristic of a media stream they also equally apply to the media data associated with such media stream and vice versa. In this particular example, the different quality variants of the media stream that can be sent to the clients are embodied by five different bitrate variants of the media stream, e.g. 5,10,15 and 17,5 Mbps. Bursts of impulse noise will generate corrupted bits in the bitstream leading to an amount of corrupted packets in a period of time which the packet repair system will try to repair (recover). The number of bytes in a packet will depend on protocol that is used to stream the media data to the client. For streaming MPEG media data over RTP/UDP/IP the packet size may in certain embodiments be approximately 1356 bytes.

In a normal low-noise situation the bit error ratio, also referred to as BER (i.e. the fraction of received bits of a data stream over a transmission path that have been altered due to noise, interference, distortion or bit synchronization errors) for e.g. an IPTV system should, in the absence of impulse noise, be typically around 10⁻⁷ or lower. A bit error rate of around 10⁻⁷ may, given the above indicated packet size translate into a very low value, in the order of 1.10⁻³, of dropped packets per second for a 10 Mbps media stream. Therefore, in the absence of impulse noise, the packet repair system may easily recover corrupted packets via for example retransmission so that the media client may render a high-quality version, e.g. high bitrate version such as an HD or UHD version of a video stream, without any significant loss of quality of experience. During an impulse noise burst however the bit error ratio may increase up to 10⁻¹ or higher. This means that of every 1 second of transmitted media data of a media stream, 100 ms is corrupted or lost. During the impulse noise event, the amount of corrupted or lost packets may be higher than the maximum recovery capacity of the packet repair system. Therefore such bit error rate may result in a large amount of corrupted frames (or audio samples), especially in case of a high quality (high bitrate and/or high frame rate) media stream, which may thus have serious implications for the quality of experience as perceived by the user of the media rendering device.

During the impulse noise, the client may detect corrupted or lost media packets and - in response - send packet repair requests to the packet repair system. Corrupted or lost media packets may only be recovered (e.g. repaired by the packet repair system (e.g. a retransmission server)) timely enough for being rendered by the client, if the repair packets are received in time (e.g. before their scheduled rendering time) by the client. The buffer size of the client and the retransmission delay are factors determining the maximum number of packets that can be successfully recovered (e.g. retransmitted to the client before their planned/scheduled rendering time). More retransmitted packets could be received in time by increasing the size of the buffer, however the buffer size cannot be made too large as that would cause too large buffer delays in the rendering of the media packets. In the below example, the client has a 200 ms jitter buffer. Processes that will influence the time before a retransmitted packet can be rendered such as round-trip-delay (i.e. the time it takes between the transmission of a packet and the time of the requested retransmission packet) and/or packet reordering delays, will decrease the effective buffer size. In this example, these delays are estimated to be around 20 ms resulting in an effective buffer size of 180 ms. This effective buffer size may be used to estimate, as a function of the available bandwidth for retransmission, for a given packet size, the recovery (repair) capacity of a retransmission based recovery system, in terms of an amount (for a period of time) of recoverable media packets. In the given example it is further assumed that a total of 20 Mbps bandwidth is available for delivery of the media stream and the retransmitted packets. Table 1 below provides an overview of the number of repaired (timely recovered) and dropped packets and the number of dropped frames for five quality variants (in terms of bitrate) of a media stream for an impulse noise event of 100 ms:

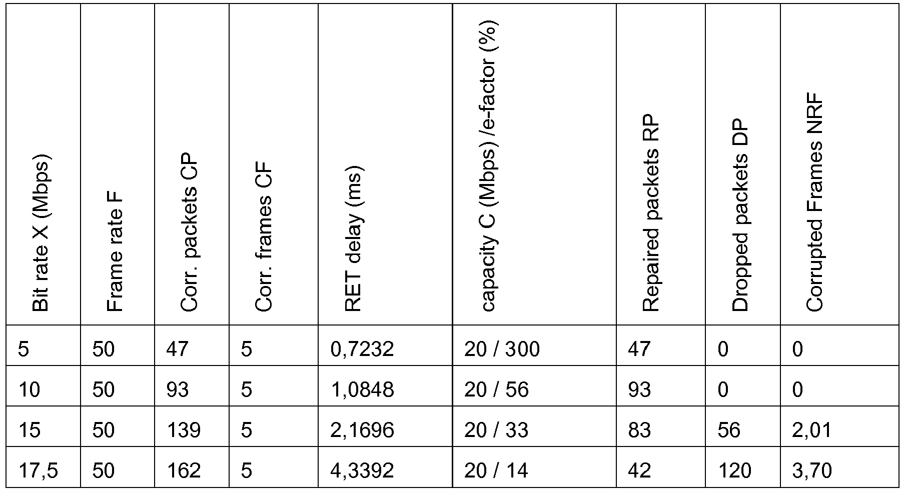

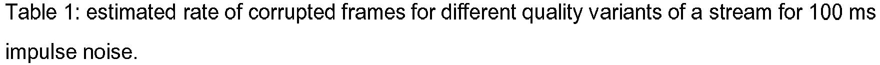

Here, X represents the bitrate in Mbps of the media stream, F represents the frame rate (in frames per second), CP the number of corrupted packets per second, CF represents the number of corrupted frames per second, the RET delay represents a measure for the rate at which retransmission packets are sent to the client, the capacity C represents the (maximum) bandwidth that is available on the access line for the transmission of the media stream and the retransmission packets to the clients, the e-factor represents the available bandwidth as a percentage of the bandwidth of the media stream, that can be used for retransmitting packets; RP represents the number of packets that are repaired (recovered) by the retransmission system, DP is the number of dropped packets, i.e. the number of packets that cannot be retransmitted to the client before their scheduled rendering time, and NRF represents the estimated amount of corrupted frames, i.e. the number of video frames per second that are estimated to be incorrectly generated as a result of exceeding the repair (recovery) capacity of the retransmission based packet recovery system. The estimated amount of corrupted (non-repaired) frames will manifest itself as video discontinuities (freezes) or image distortions and thus correlate with the quality of experience experienced by user. The estimated amount of corrupted frames (for a period of time) may thus be used as an indicator of, or an input parameter for determining, a Quality of Experience level or Quality of Experience parameter according to the invention.

Certain parameters such as the bitrate X, the frame rate F of the different quality variants of the media stream, the buffer size and the capacity C may be predetermined or static. Other parameters such as the corrupted packets and frames, the repaired packets and the dropped packets may depend on the impulse noise length scale. In this disclosure, such parameters may be generally referred to as packet repair information. The packet repair information, may, in an embodiment of the invention, be monitored by a monitoring system **124** which may be implemented in the quality server **120** and/or one or more other network elements (as shown in **Fig. 1****).** On the basis of these monitored values, estimated parameter values, such as the estimate amount of corrupted or dropped packets per time period and/or the estimated amount of corrupted frames, may be determined for other quality variants of the media stream that are available to the client.

As clearly shown in table 1, during an impulse noise of 100 ms, the packet repair (recovery) system will only be able to repair (recover) all corrupted (and/or lost) packets for the 5 and 10 Mbps versions of the media stream. At higher bitrates, the amount of corrupted packets (and/or lost packets) will become larger than the maximum amount of packets that the repair system is able to send in time (i.e. before their scheduled rendering time) to the client. This is due to the fact that on one hand an increase in the bitrate of the media stream will result in a decrease of the bandwidth that is available for retransmission (as the total (maximum) bandwidth that is available for transmission of the media stream and the retransmission of packets is kept constant) and on the other hand the number of packets for a given period of time that require recovery (or repairing) becomes higher for higher bitrates, during an impulse noise event.

Increasing the bitrate of the media stream to higher values will therefore increase the amount of dropped packets and therefore the number of corrupted frames, thereby increasing the number of artifacts and/or screen freezes during the rendering process of the media stream. The number of corrupted frames therefore can be used as a parameter that correlates with the quality of experience.

Table 1 further shows that a client that is rendering a high quality version of the media stream (e.g. a 17,5 Mbps version) may monitor the amount of repaired packets RP, dropped packets DP and corrupted frames NRF and if the amount of corrupted frames exceeds a certain threshold due to noise, the client may select (e.g. switch to) a lower quality version of the media data comprised in another (lower bit rate) media stream such that the amount of corrupted frames is reduced.

Here, the threshold may be selected as a certain (maximum) amount of corrupted frames for a period of time that still provides a certain acceptable QoE level. In an embodiment, the selection of the lower quality version may be based on estimated values of the corrupted frames (for a period of time) of the media streams that are available to the client. For example, in an embodiment, the client may select the highest quality version for which the amount of corrupted frames can be kept below the threshold. For example, if the threshold is set to zero corrupted frames (or a very small number above zero), a client that is rendering the 17,5 Mbps bitrate version may determine a corrupted frame rate of 3,7 and determine that the associated quality of experience parameter is lower than the threshold value. In that case, the media client may decide to continue rendering on the basis of a lower quality variant of the media stream, e.g. the 10 Mbps version of the media stream, which is preferably the highest quality variant of the media stream that has an estimated quality of experience parameter associated with an estimated amount of corrupted frames of approximately zero.

A media selector in the media client may select the most suitable quality variant. To that end, the media selector may be configured to:
- monitor the packet repair information, preferably the number of dropped (i.e. unrecoverable) and, optionally also the number of repaired packets RP,DP;
- optionally determine an estimate of the number of corrupted frames NRF for the different quality versions of the media stream on the basis of the packet repair information that is available to the media client. Alternatively this determination may be performed by another device, e.g. by the monitoring system **124** which may be implemented in the quality server **120** and/or one or more other network elements.
- optionally determine on the basis of the estimated NRFs an estimated quality of experience level (parameter) for each available quality variant of the media stream;
- compare the estimated quality of experience parameter with a threshold quality of experience value; and,
- select the highest quality version or a high quality version of the media stream that has an estimated quality of experience parameter above the threshold level (or an estimated quality of experience parameter that is closest to the threshold level).

After selection, the media selector may instruct the client to continue the rendering process on the basis of the selected quality version of the media stream. If the selection results in another quality version of the media stream than rendered at the moment of selection, than the selection will result in the client switching to another media stream.

During the rendering of the selected quality variant, the media client may continue monitoring the packet repair information, determine a quality of experience parameter and respond to changes in this parameter by selecting a different quality version of the media stream on the basis of a comparison of the quality of experience parameter and the threshold value. For example, if the impulse noise increases to a level of 200 ms, the media selector may determine a new estimate for certain parameters associated with the packet repair information for the available quality versions, as shown in table 2, determine an estimated quality of experience parameter on the basis of one or more of the estimated packet repair information parameters, preferably on the basis of the estimated amount of corrupted frames for a period of time (i.e. the NRF of table 2) and determine on the basis of the estimated quality of experience parameters for each quality variant to continue the rendering process on the basis of the 5 Mbps quality version of the media stream so that the quality of experience can be maintained at an acceptable level.

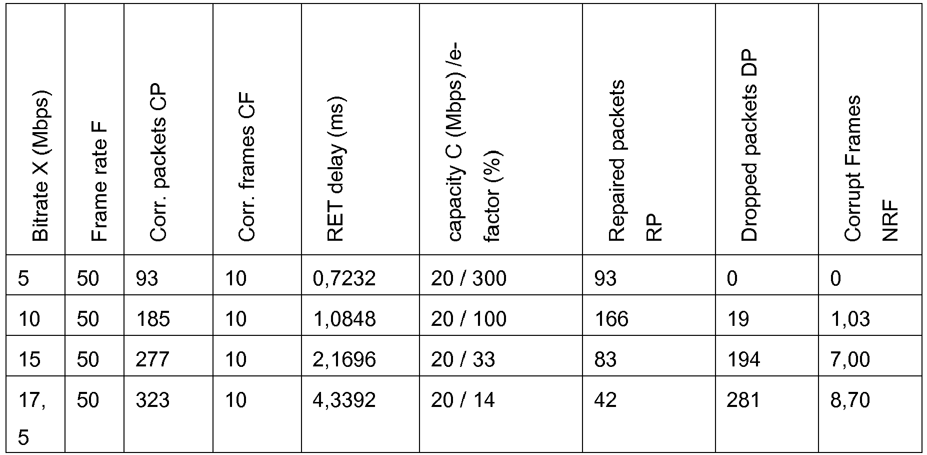

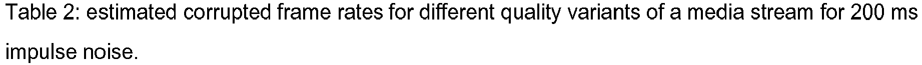

Further, if the number of dropped (unrecoverable) packets decreases, e.g. due to a decrease in the impulse noise, the client may repeat the above-described algorithm in order to determine (and switch to) a new (higher) quality variant of the media stream.

It is submitted that the invention is not limited to the example described above and many variations are possible without departing from the essence of the invention. For example, in an embodiment, the different quality variants of a media stream may have different frame rates. Moreover, in a further embodiment, the different quality variants may have different GOP sizes, i.e. different (time) distances between (MPEG) I-frames in the media stream. Furthermore, (part of) the functionality described above may be implemented as part of the client (or the media selector in the client). Alternatively, in an embodiment of the invention, part of the functionality may be implemented as a network module that is configured for receiving information from the client on the amount of dropped (unrecoverable) packets for a particular quality version. The network module may be arranged to estimate, based on the received information, the amount of corrupted frames (and/or audio samples) for the rendered version, alternatively this amount is received as a value from the client. The amount of corrupted frames (related to a period of time) may be used by the network module as input for determining whether the quality of experience is sufficiently high. If this is not the case (e.g. the estimated quality of experience is below a threshold the network module may be configured to send an instruction to the client for switching to another quality version of the media stream in order to keep the quality of experience of the rendered media stream at a certain acceptable level.

In order to enable media clients selection of a low quality variant of the media stream, the media transmission system may comprise a monitoring system **124.** The monitoring system may be configured to collect packet repair information associated with media clients that are rending quality versions of the media stream. Packet repair information may comprise parameters as described above with reference to table 1 and 2, including the amount of repaired packets RP, the amount of dropped packets DP and the amount of corrupted frames. In an embodiment, the monitoring system may further collect noise information, e.g. signal-to-noise information, associated with a part or parts of lossy data transmission paths, e.g. fixed copper parts of the access network, DSL-type subscriber lines and/or powerline data transmission lines, that connect media rendering devices to media sources of the managed media transmission system. The noise information may be used to correlate the packet repair information with a certain (impulse) noise level. This way an (impulse) noise level may be used in order to estimate packet repair information including parameters such as the number of corrupted and/or dropped packets caused by the impulse noise level. On the basis of the thus collected information, the monitoring system may determine for each media client a quality of experience parameter that is indicative of the quality of experience that is provided to the user.

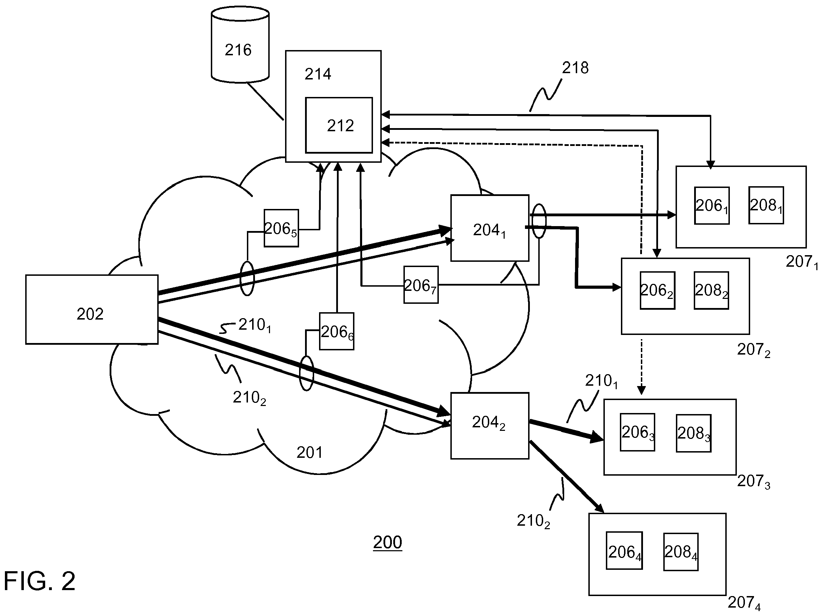

**Fig. 2** depicts at least part a media data transmission system comprising a monitoring system according to one embodiment of the invention. In particular, **Fig. 2** depicts part of a media data transmission system that is similar to **Fig. 1****,** including (part of) an access network **201,** a connection network node **202** transmitting multiple media streams to edge nodes (e.g. DSLAMs) **204,** media rendering devices **207₁₋₄** comprising a media client **208₁₋₄** connected via lossy data transmission paths to the access network, a quality management system **214** connected to at least one quality database **216** and a monitoring system **212.**

A plurality of monitoring agents **206₁₋₇** may be installed at various locations of the access network, subscriber lines and/or home networks to which the media rendering devices are connected to in order to (locally) determine the packet repair information and, in some embodiments, noise information. Preferably, multiple monitoring agents at different locations are used as the effect of impulse noise may depend on the geographical location and local circumstances.

For example, in an embodiment, a monitoring agent **206₅₋₇** may be configured to measure impulse noise on fixed copper-based transmission lines of the access network. In another embodiment, a monitoring agent **206₁₋₄** in the media rendering device may be configured to measure packet loss and, optionally, the impulse noise on the terminal side of the lossy data path that connects the media rendering device with the access network. The information that is measured by the monitoring agents may be reported to the monitoring system, which uses the information in order to determine a quality of experience parameter that represents a QoE level that is experienced by a user. As the electromagnetic noise, preferably impulse noise, may vary geographically and over time, the monitoring may generate different quality of experience parameters for different media rendering devices or groups/clusters of media rendering devices.

The quality of experience parameter determined by the monitoring system may be sent to the media clients of the media rendering devices using e.g. an unicast channel **218.** In an embodiment, in case the media packets are transmitted on the basis of the RTP streaming protocol to a media rendering device, the packet repair information may be sent in RTCP reports to the monitoring system and/or the quality of experience parameters may be sent in RTCP reports to the media clients.

The media client may use the quality of experience parameter and a threshold value in order to determine whether the QoE of the rendered media data is at an acceptable level. If the QoE is below the acceptable level, the media client may determine to select a lower quality version of the media stream that the client is processing at that moment.

In case the different quality versions are multicast to the media rendering devices, the media client may send an IGMP leave message, preferably to a DSLAM in a delivery network, for leaving the media stream that a media rendering device is processing at that moment, and an IGMP join message joining a low bitrate version of it. If the different bitrate versions are broadcast to the media rendering devices, the media client may cause the tuner of the media rendering device to tune into a low bitrate version of the media stream that a media rendering device is processing at that moment. Further, if one or more lower bitrate versions can be retrieved from a media server over a unicast communication channel, the media client may send a request for a lower bitrate version to that media server.

The monitored quality of experience parameters, the packet repair information of the media clients and noise information associated with different locations in the lossy data transmission paths may be stored in the quality database 216. In an embodiment, the history of the monitored information that is stored in the quality database may be used by a media client for selecting a new media stream (e.g. a TV channel). For example, if a user activates a media rendering device, the media client may use the history of the quality of experience parameters and/or the noise information of the same or similar data transmission paths to which the media rendering device is connected to (or to which media rendering devices that are located close to the media rendering device are connected to) in order to determine a bitrate version for the selected channel.

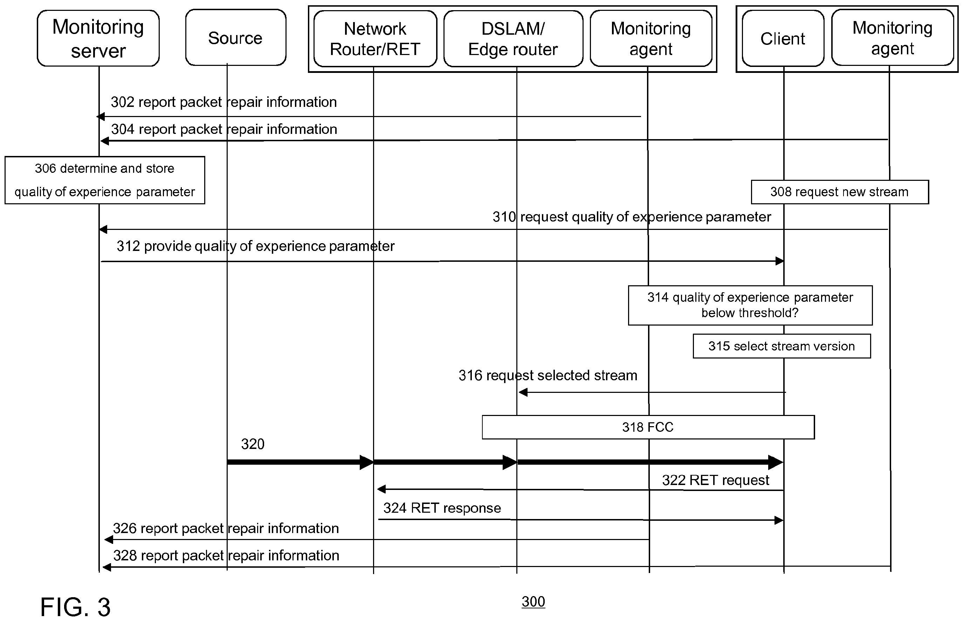

**Fig. 3** depicts an example of a process for controlling the transmission of media data according to an embodiment of the invention. The process may start in a situation wherein monitoring agents have already collected (measured) packet repair information associated with lossy data transmission lines in the network (steps **302** and **304**). The packet repair information on the network-side and the client-side over a period of time may be reported to the monitoring server. The monitoring server may use the packet repair information for determining a quality of experience parameter that correlates with an amount of corrupted frames caused by corrupted or lost packets that cannot be repaired (recovered) in time by the packet repair (recovery) system. Thereafter, the packet repair information and the quality of experience parameter may be stored in the quality database together with a media client identifier, e.g. an IP address or the like (step **306**). This process may be repeated in time so that the quality database comprises historical information on the quality of experience parameter for a particular media client or a group of media clients.

Thereafter, a media client may be activated by a user in order to request delivery of a certain media stream, e.g. a new television channel, to the media client (step **308).** The user may e.g. use an electronic programming guide to select a new television channel. The media client may be configured to select by default the high quality version (or the highest quality version) of the media stream that is available for the media client. However, in order to check whether this high quality version will provide an acceptable quality of experience, the client (or the monitoring agent associated with the media client) may send a request for a quality parameter, preferably a quality of experience parameter to the monitoring system (step **310**). In an embodiment, the client may send such a request for a quality parameter in case it detects a noise level that is higher than a certain threshold noise level.

The monitoring system may use the information in the request, e.g. an IP address of the requesting media client, to select a representative quality of experience parameter for the media client from the quality database, which quality of experience parameter is associated with the quality version selected or to be selected by the media client, and sent the selected quality of experience parameter back to the media client. Such representative parameter may be an historical quality of experience value determined on the basis of packet repair information of the requesting media client or may be a historical quality of experience value determined on the basis of packet repair information of media clients that are located in the same geographical area, e.g. connected to the same DSLAM. The thus selected quality of experience parameter may be sent to the client (step **312**).

The media client may use the received quality of experience parameter and a threshold value in order to determine if it is below a certain threshold value representing a certain acceptable quality of experience level (step **314**). In case it is below the threshold, there is a large chance that during the rendering of the high quality version of the media stream the quality of experience not acceptable. Hence, in that case the client may select a lower quality version of the selected media stream (step **315**) in order to increase the quality of experience level and request the selected media stream from a network node, e.g. a DSLAM (step **316**). Upon request of the new stream (e.g. a TV channel), the media transmission system may trigger a known fast channel change (FCC) process in order to reduce delays caused during selection of the stream (step **318**). Thereafter, the selected quality version of media stream may be transmitted, e.g. multicast, on the basis of a streaming protocol such as RTP to the media client over a lossy data transmission path (step **320**). During transmission of the media stream, the client may send a request to the packet repair system RET in order to instruct the packet repair system to retransmit the requested packet (or packets) in a response message back to the client. As the media client has selected the quality version of the media stream, with an associated estimated quality of experience that is sufficiently high, the packet repair (recovery) system is expected to have sufficient bandwidth to repair (recover) corrupted or lost packets, such that the required quality of experience can be maintained during impulse noise.

In an embodiment, instead of the client requesting the monitoring system to transmit a quality of experience parameter (steps **310** and **312** of the process of **Fig. 3**), the client may also use historical quality of experience parameters and/or noise and packet repair information (e.g. parameters and information of previous streaming sessions) that the media client has stored in the memory in the media rendering device.

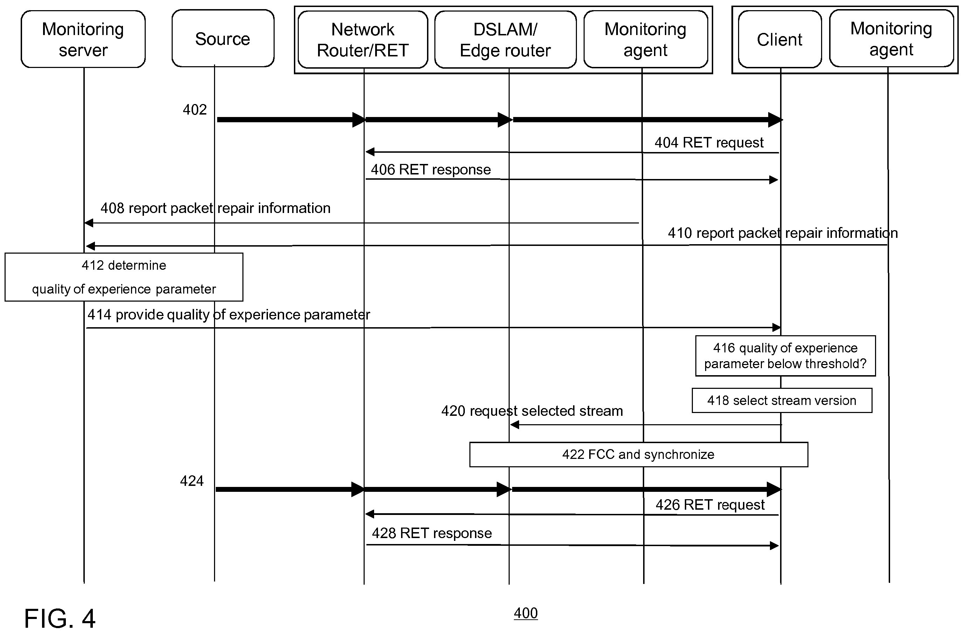

**Fig. 4** depicts an example of a process for controlling the transmission of media data according to another embodiment of the invention. In this particular embodiment, a media client is receiving and processing packets of a media stream of a certain quality (step **402**). During the rendering process, the media client may request from the packet repair (recovery) system (step **404**) retransmission of packets that are lost or corrupted and receive the requested packets from the repair system (step **406**) so that the quality of experience during the rendering process is maintained at a certain quality of experience level. Further, a monitoring agent in the media rendering device and/or monitoring agents in the network may send packet repair information to the monitoring server (steps **408** and **410**) so that it can determine quality of experience parameters for media clients (step **412**). For example, in case of RTP based media streaming, the client in the media rendering device may send packet repair information in one or more RTCP reports to the monitoring server. The media client may locally store the monitored packet repair information in a memory of the media rendering device.

The monitoring server may periodically or regularly send a quality of experience parameter to a media client (step **414**). In an embodiment, a quality of experience parameter may be sent to the media client in response to a request from the media client. On the basis of the quality of experience parameter the client may then compare the quality of experience parameter with a threshold value in order to determine whether the quality of experience of the rendered content is below an (minimum) acceptable level (step **416**).

In case the quality of experience is below a certain acceptable level, a media selector in the client may be triggered to determine estimates of the quality of experience parameter for the quality variants of the media stream that are available to the media client (i.e. for the quality variants of the media data being available for the media client via different media streams). The media selector may use the estimated quality of experience parameters and the threshold value in order to select the highest quality version for which the estimated quality of experience parameter, indicative of a quality of experience, can be kept above the threshold or otherwise at least an estimated quality of experience parameter that is closest to the threshold (step **418**). After selection, the media selector may instruct the media client to request the selected stream (step 420) and to continue the rendering process on the basis of the selected quality version of the media stream, when this selected quality version (e.g. a different media stream with media data of the selected quality version) is being received.

In order to a realize fast and smooth transition from one quality version (e.g. a first media stream) to another quality version (e.g. a second media stream, the system may use a fast channel change scheme FCC in combination with a synchronization and frame alignment process so that continuity of the correct sequence of media frames during switching to the lower quality version of the media stream is guaranteed (step **422**). Thereafter, the media client may start processing media packets from the other (e.g. lower) quality version of the media packets (step **424**) while corrupted or lost media packets may be requested from the packet repair (recovery) system (steps **426** and **428**). The process thus provides a simple and effective way to optimize (e.g. to enhance the quality of experience of the rendering process of media clients in a media transmission system, in the presence of impulse noise.

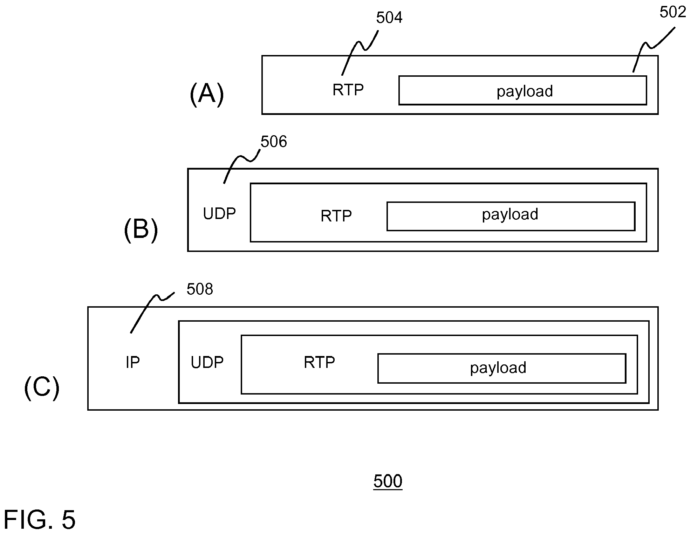

**Fig. 5A-5C** depict various ways of formatting multimedia data (payload) into media packets that are suitable for multimedia data delivery over various (transmission) networks. In embodiments of the invention, one way of checking whether a media packet is lost or corrupted, is by checking the header information of the received media packets. **Fig. 5A** depicts an RTP data container comprising an RTP header and multimedia payload **502.** The multimedia payload may be in the form of a number of MPEG transport stream media packets, typically around seven. The RTP header **504** comprises an RTP sequence number, which may be used by the client to determine that a RTP media packet is lost (missing), if it detects an RTP sequence number discontinuity with regard to the RTP media packets it receives.

Packet repair information regarding lost or corrupted media packets, including missing RTP packets, may be sent to the monitoring system on the basis of RTP Control Protocol (RTCP) reports.

An RTP media packet may be further packaged on the basis of the UDP protocol as shown in **Fig. 5B****.** The UDP packet header **506** may comprise checksum information that can be used by the client in order to check whether an UDP media packet is corrupted due to e.g. impulse noise. If an UDP checksum is detected the client may drop the UDP media packet. The number of corrupted UDP packets may be used as information that is indicative of the impulse noise level. The UDP packet may be packaged as payload of an IP media packet as shown in **Fig. 5C****.** The IP header **508** may also comprise checksum information that can be used by the client in order to determine whether an IP media packet is corrupted. If an IP checksum is detected the client may drop the IP media packet.

Hence, the information in the header of the data containers that are used to transport media payload over the network may be used in order to determine the amount of corrupted and/or lost media packets. It is submitted that the term media packets not only covers the data formats as discussed with reference to **Fig. 5A-5C** but more generally refers to any data format used in any of the OSI layers for sending media data (e.g. video, audio, text, graphics, etc.) to a client. This term thus includes for example TCP packets, xDSL DMT symbols, AVC/AAC NAL units, MPEG macroblocks, HEVC tiles, segments and slices, etc.

As described above, a steep increase in the number of dropped packets (in relation to the total number of packets transmitted) may be a good indicator for the presence of an impulse noise level that lowers the QoE under a certain minimum level such that a low bitrate media stream is needed in order to decrease the number of dropped packets per unit of time in relation to the total number of packets transmitted per said unit of time (in other words the ratio or percentage of dropped packets of the total packets transmitted), such that the QoE is increased to an acceptable level. Further information indicative of impulse noise includes information on the number of buffer overflow/underflows that a client experiences within a period of time and/or the signal-to-noise ratio of part of the lossy data transmission path.

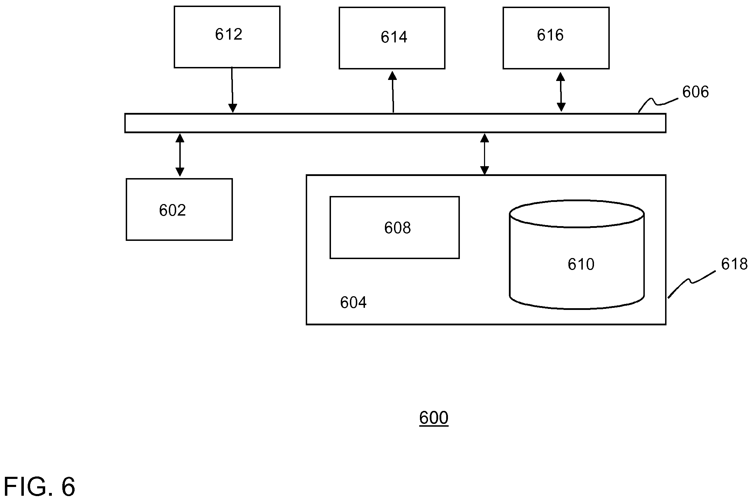

**Fig. 6** depicts a block diagram illustrating an exemplary data processing system that may be used in a media transmission system as described with reference to **Fig. 1** and 2. Data processing system **600** may include at least one processor **602** coupled to memory elements **604** through a system bus **606.** As such, the data processing system may store program code within memory elements **604.** Further, processor **602** may execute the program code accessed from memory elements **604** via system bus **606.** In one aspect, data processing system **600** may be implemented as a computer that is suitable for storing and/or executing program code. It should be appreciated, however, that system **600** may be implemented in the form of any system including a processor and memory that is capable of performing the functions described within this specification.

Memory elements **604** may include one or more physical memory devices such as, for example, local memory **608** and one or more bulk storage devices **610.** Local memory may refer to random access memory or other non-persistent memory device(s) generally used during actual execution of the program code. A bulk storage device may be implemented as a hard drive or other persistent data storage device. The processing system **600** may also include one or more cache memories (not shown) that provide temporary storage of at least some program code in order to reduce the number of times program code must be retrieved from bulk storage device **610** during execution.

Input/output (I/O) devices depicted as input device **612** and output device **614** optionally can be coupled to the data processing system. Examples of input device may include, but are not limited to, for example, a keyboard, a pointing device such as a mouse, or the like. Examples of output device may include, but are not limited to, for example, a monitor or display, speakers, or the like. Input device and/or output device may be coupled to data processing system either directly or through intervening I/O controllers. A network adapter **616** may also be coupled to data processing system to enable it to become coupled to other systems, computer systems, remote network devices, and/or remote storage devices through intervening private or public networks. The network adapter may comprise a data receiver for receiving data that is transmitted by said systems, devices and/or networks to said data and a data transmitter for transmitting data to said systems, devices and/or networks. Modems, cable modems, and Ethernet cards are examples of different types of network adapter that may be used with data processing system **600.**

As pictured in **FIG. 6****,** memory elements **604** may store an application **618.** It should be appreciated that data processing system **600** may further execute an operating system (not shown) that can facilitate execution of the application. Application, being implemented in the form of executable program code, can be executed by data processing system **600,** e.g., by processor **602.** Responsive to executing application, data processing system may be configured to perform one or more operations to be described herein in further detail.

In one aspect, for example, data processing system **600** may represent a client data processing system. In that case, application **618** may represent a client application that, when executed, configures data processing system **600** to perform the various functions described herein with reference to a "client". Examples of a client can include, but are not limited to, a personal computer, a portable computer, a mobile phone, or the like.

In another aspect, data processing system **600** may represent a server. For example, data processing system **600** may represent an HTTP server in which case application **618,** when executed, may configure data processing system **600** to perform HTTP server operations.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope of the invention. The embodiment was chosen and described in order to best explain the principles of the invention and the practical application, and to enable others of ordinary skill in the art to understand the invention for various embodiments with various modifications as are suited to the particular use contemplated.

## Claims

1. Method for controlling transmission of media data to a media rendering device comprising:
a media client (208) of a media rendering device (112, 207) receiving media packets associated with a first media stream, said media packets being part of a transmission over a lossy transmission path to said media client, wherein a lossy data transmission path is a data transmission path sensitive to impulse noise, whereby at least a part of said media packets that are lost or corrupted during said transmission are being recovered by a packet repair system (114);
said media client receiving or determining a quality of experience parameter associated with said first media stream, said quality of experience parameter being based on packet repair information, at least part of said packet repair information being determined by said client and being indicative of an amount of said media packets that is not recovered timely enough by said packet repair system, said packet repair system being a packet retransmission scheme, in order to be used in the rendering of media packets of said first media stream, said quality of experience parameter correlating with an amount of corrupted video parts, wherein video parts comprise video frames, and/or corrupted audio samples, of said first media stream, wherein said amount of corrupted video parts and/or corrupted audio samples is generated within a period of time as part of said rendering;
said media client requesting transmission of a second media stream over said lossy transmission path to said media client, if said quality of experience parameter indicates that a quality of experience of said rendered first media stream is below a predetermined threshold, wherein said second stream is a lower quality version of said first media stream; and,
said media client switching from receiving packets of said first stream to receiving packets of said second media stream.

2. Method according to claim 1 wherein a media packet is associated with a scheduled rendering time and wherein said amount of corrupted video parts and/or audio samples are caused by corrupted or lost media packets that cannot be recovered by said packet repair system before the scheduled rendering time of the media packets.

3. Method according to claims 1 or 2 wherein said media client requesting transmission of a second media stream comprises:
selecting said lower quality version of said media stream from a plurality of quality versions of said media stream such that said quality of experience is raised above said threshold.

4. Method according to any of claims 1-3 wherein said media client requesting transmission of a second media stream comprises:
using said packet repair information for determining an estimated quality of experience level for different quality versions of the media stream that are available to said media client;
selecting said lower quality version of the media stream on the basis of said estimated quality of experience parameters and said threshold value.

5. Method according to any of claims 1-4 wherein said first and/or second media stream is transmitted on the basis of a point-to-multipoint transmission technique, preferably a broadcast or a multicast technique; or, on the basis of point-to-point transmission technique, preferably a unicast transmission technique, more preferably an (HTTP) adaptive streaming technique, to said media client.

6. Method according to any of claims 1-5 wherein said packet repair information further comprises: the amount of packets that is repaired by said packet repair system; the amount of packets that is not repaired by said packet repair system; and/or, the number of retransmission requests sent by the media client to said packet repair system.

7. Method according to any of claims 1-6 wherein said quality of experience parameter is determined by a monitoring system that is configured to monitor packet repair information associated with said media client and, optionally, noise information indicative of (impulse) noise at one or more parts of said lossy data transmission path.

8. Method according to claim 7 wherein said monitoring system executes a process of:
determining said quality of experience parameter on the basis of packet repair information received from one or more monitoring agents configured to monitor data lines of said access network and/or implemented in said media rendering device;
sending said quality of experience parameter to the media client in said media rendering device.

9. Method according to any of claims 1-8 wherein said packet repair information is transmitted in one or more RTCP reports to said monitoring system and/or wherein said quality of experience parameter is transmitted in one or more RTCP reports to said media client; and/or, wherein media packets associated with said first media stream, and optionally said second media stream, are being transmitted to said media client on the basis of at least one of the MPEG protocol, the RTP protocol, the UDP protocol and/or the IP protocol.

10. Method according to any of claims 1-9 wherein a digital subscriber line (xDSL) technique, preferably a VDSL, VDSL+, or VDSL2 technique, is used for transmitting media packets over at least part of said lossy data transmission path; and/or, wherein said lossy data transmission path comprises at least one of: a (DSL) subscriber line, a powerline; and/or, a residential wired or wireless network.

11. A media rendering device connectable to a lossy data transmission path, said media rendering device comprising:
a computer readable storage medium having computer readable program code associated with a media client embodied therewith, and a processor, preferably a microprocessor, coupled to the computer readable storage medium, wherein responsive to executing the computer readable program code, the processor is configured to perform executable operations comprising:
receiving media packets associated with a first media stream, said media packets being transmitted over a lossy transmission path to said media client, wherein a lossy data transmission path is a data transmission path sensitive to impulse noise, and at least part of said media packets that are lost or corrupted during said transmission are being recovered by a packet repair system, said packet repair system being a packet retransmission scheme;
receiving or determining a quality of experience parameter associated with said first stream, said quality of experience parameter being based on packet repair information, at least part of said packet repair information being determined by said client and being indicative of an amount of said media packets that is not recovered timely enough by said packet repair system in order to be used in the rendering of media packets of said first media stream, said quality of experience parameter correlating with an amount of corrupted video parts, wherein video parts comprise video frames, and/or corrupted audio samples, of said first media stream, wherein said amount of corrupted video parts and/or corrupted audio samples is generated within a period of time as part of said rendering;
requesting transmission of a second media stream over said lossy transmission path to said media client, if said quality of experience parameter indicates that a quality of experience of said rendered first media stream is below a predetermined threshold, wherein said second stream is a lower quality version of said first media stream; and,
switching from receiving packets of said first stream to receiving packets of said second media stream.

12. Media rendering device according to claim 11 wherein said lower quality version of said first media stream is selected from a plurality of quality versions of said media stream such that the quality of experience is raised above said threshold.

13. Media rendering device according to claims 11 or 12 wherein requesting transmission of a second media stream comprises:
using said packet repair information for determining an estimated quality of experience level for different quality versions of the media stream that are available to said media client;
selecting said lower quality version of the media stream on the basis of said estimated quality of experience parameters and said threshold value.

14. Media rendering device according to any of claims 11-13 wherein switching from receiving packets of said first stream to receiving packets of a second stream comprises:
leaving a first multicast group associated with said first media stream and joining a second multicast group associated with said second media stream; or,
tuning out of a first broadcast of said first stream and tuning into a second broadcast of said second stream

15. Computer program product comprising software code portions stored in a memory, said software code portions configured for, when run by a processor, executing the method steps of any of claims 1-10.

## Patentansprüche

1. Verfahren zum Steuern der Übertragung von Mediendaten an ein Medienwiedergabegerät, umfassend:
einen Medienclient (208) eines Medienwiedergabegeräts (112, 207), das mit einem ersten Mediendatenstrom assoziierte Mediendatenpakete empfängt, wobei die Mediendatenpakete Teil einer Übertragung über einen verlustbehafteten Übertragungsweg an den Medienclient sind, wobei ein verlustbehafteter Datenübertragungsweg ein impulsgeräuschempfindlicher Datenübertragungsweg ist, wodurch mindestens ein Teil der Mediendatenpakete, die während der Übertragung verloren gehen oder beschädigt werden, durch ein Datenpaketkorrektursystem (114) wiederhergestellt wird;
wobei der Medienclient einen mit dem ersten Mediendatenstrom assoziierten Quality-of-Experience-Parameter empfängt oder ermittelt, wobei der Quality-of-Experience-Parameter auf Datenpaketkorrekturinformationen basiert, mindestens ein Teil der Datenpaketkorrekturinformationen durch den Client ermittelt wird und eine Menge der Mediendatenpakete angibt, die nicht frühzeitig genug durch das Datenpaketkorrektursystem wiederhergestellt wird, und das Datenpaketkorrektursystem ein Datenpaketübertragungswiederholungsschema ist, um bei der Wiedergabe von Mediendatenpaketen des ersten Mediendatenstroms verwendet zu werden, wobei der Quality-of-Experience-Parameter mit einer Menge von beschädigten Videoteilen, wobei Videoteile Videoeinzelbilder umfassen, und/oder beschädigten Audioproben des ersten Mediendatenstroms korreliert, wobei die Menge von beschädigten Videoteilen und/oder beschädigten Audioproben innerhalb eines Zeitabschnitts als Teil der Wiedergabe erzeugt wird;
wobei der Medienclient die Übertragung eines zweiten Mediendatenstroms über den verlustbehafteten Übertragungsweg an den Medienclient anfordert, falls der Quality-of-Experience-Parameter angibt, dass eine Quality of Experience des wiedergegebenen ersten Mediendatenstroms unter einem zuvor ermittelten Schwellenwert liegt, wobei der zweite Datenstrom eine Version des ersten Mediendatenstroms mit einer niedrigeren Qualität ist; und
wobei der Medienclient vom Empfangen von Datenpaketen des ersten Datenstroms zum Empfangen von Datenpaketen des zweiten Mediendatenstroms übergeht.

2. Verfahren nach Anspruch 1, wobei ein Mediendatenpaket mit einer vorgesehenen Wiedergabezeit assoziiert wird und wobei die Menge beschädigter Videoteile und/oder Audioproben auf beschädigte oder verlorene Mediendatenpakete, die durch das Datenpaketkorrektursystem vor der vorgesehenen Wiedergabezeit der Mediendatenpakete nicht wiederhergestellt werden können, zurückführbar ist.

3. Verfahren nach Anspruch 1 oder 2, wobei das Anfordern der Übertragung eines zweiten Mediendatenstroms durch den Medienclient Folgendes umfasst:
Auswählen der Version des Mediendatenstroms mit einer niedrigeren Qualität aus einer Vielzahl von Qualitätsversionen des Mediendatenstroms, sodass die Quality of Experience über den Schwellenwert hinaus angehoben wird.

4. Verfahren nach einem der Ansprüche 1-3, wobei das Anfordern der Übertragung eines zweiten Mediendatenstroms durch den Medienclient Folgendes umfasst:
Verwenden der Datenpaketkorrekturinformationen zum Ermitteln einer geschätzten Quality-of-Experience-Stufe für unterschiedliche Qualitätsversionen des Mediendatenstroms, die dem Medienclient zur Verfügung stehen;
Auswählen der Version des Mediendatenstroms mit einer niedrigeren Qualität basierend auf den geschätzten Quality-of-Experience-Parametern und dem Schwellenwert.

5. Verfahren nach einem der Ansprüche 1-4, wobei der erste und/oder der zweite Mediendatenstrom basierend auf einer Punkt-zu-Mehrpunkt-Übertragungstechnik, vorzugsweise einer Broadcast- oder einer Multicast-Technik, oder basierend auf einer Punkt-zu-Punkt-Übertragungstechnik, vorzugsweise einer Unicast-Übertragungstechnik, besonders vorzugsweise einer (HTTP-)Adaptive-Streaming-Technik, an den Medienclient übertragen werden.

6. Verfahren nach einem der Ansprüche 1-5, wobei die Datenpaketkorrekturinformationen ferner Folgendes umfassen: die Menge von Datenpaketen, die durch das Datenpaketkorrektursystem korrigiert wird; die Menge von Datenpaketen, die nicht durch das Datenpaketkorrektursystem korrigiert wird; und/oder die Zahl von durch den Medienclient an das Datenpaketkorrektursystem gesendeten Übertragungswiederholungsanforderungen.

7. Verfahren nach einem der Ansprüche 1-6, wobei der Quality-of-Experience-Parameter durch ein Überwachungssystem, das konfiguriert ist, um mit dem Medienclient assoziierte Datenpaketkorrekturinformationen sowie wahlweise (Impuls-)Geräusche an einem oder mehreren Teilen des verlustbehafteten Datenübertragungswegs angebende Geräuschinformationen zu überwachen, ermittelt wird.

8. Verfahren nach Anspruch 7, wobei das Überwachungssystem folgenden Prozess ausführt:
Ermitteln des Quality-of-Experience-Parameters basierend auf Datenpaketkorrekturinformationen, die von einem oder mehreren Überwachungsagenten, die konfiguriert sind, um Datenleitungen des Zugangsnetzes und/oder in dem Medienwiedergabegerät implementierte Datenleitungen zu überwachen, empfangen werden;
Senden des Quality-of-Experience-Parameters an den Medienclient in dem Medienwiedergabegerät.

9. Verfahren nach einem der Ansprüche 1-8, wobei die Datenpaketkorrekturinformationen in einer oder mehreren RTCP-Meldungen an das Überwachungssystem übertragen werden und/oder wobei der Quality-of-Experience-Parameter in einer oder mehreren RTCP-Meldungen an den Medienclient übertragen wird; und/oder wobei Mediendatenpakete, die mit dem ersten Mediendatenstrom und wahlweise dem zweiten Mediendatenstrom assoziiert sind, basierend auf dem MPEG-Protokoll und/oder dem RTP-Protokoll und/oder dem UDP-Protokoll und/oder dem IP-Protokoll an den Medienclient übertragen werden.

10. Verfahren nach einem der Ansprüche 1-9, wobei eine Digital-Subscriber-Line(xDSL)-Technik, vorzugsweise eine VDSL-, VDSL+- oder VDSL2-Technik, zum Übertragen von Mediendatenpaketen über mindestens einen Teil des verlustbehafteten Datenübertragungswegs verwendet wird; und/oder wobei der verlustbehaftete Datenübertragungsweg Folgendes umfasst:
eine (DSL-)Teilnehmeranschlussleitung und/oder eine Netzleitung und/oder ein Festnetz oder ein Drahtlosnetz zur privaten Nutzung.

11. Medienwiedergabegerät, das mit einem verlustbehafteten Datenübertragungsweg verbindbar ist, wobei das Medienwiedergabegerät Folgendes umfasst:
einen computerlesbaren Datenträger mit computerlesbarem Programmcode, der mit einem damit ausgebildeten Medienclient assoziiert ist, und einen Prozessor, vorzugsweise einen Mikroprozessor, der an den computerlesbaren Datenträger gekoppelt ist, wobei der Prozessor konfiguriert ist, um in Ansprechen auf das Ausführen des computerlesbaren Programmcodes ausführbare Vorgänge durchzuführen, umfassend:
Empfangen von mit einem ersten Mediendatenstrom assoziierten Mediendatenpaketen, wobei die Mediendatenpakete über einen verlustbehafteten Übertragungsweg an den Medienclient übertragen werden, wobei ein verlustbehafteter Datenübertragungsweg ein impulsgeräuschempfindlicher Datenübertragungsweg ist, und wobei mindestens ein Teil der Mediendatenpakete, die während der Übertragung verloren gehen oder beschädigt werden, durch ein Datenpaketkorrektursystem wiederhergestellt wird, wobei das Datenpaketkorrektursystem ein Datenpaketübertragungswiederholungsschema ist;
Empfangen oder Ermitteln eines mit dem ersten Datenstrom assoziierten Quality-of-Experience-Parameters, wobei der Quality-of-Experience-Parameter auf Datenpaketkorrekturinformationen basiert und mindestens ein Teil der Datenpaketkorrekturinformationen durch den Client ermittelt wird und eine Menge der Mediendatenpakete angibt, die nicht frühzeitig genug durch das Datenpaketkorrektursystem wiederhergestellt wird, um bei der Wiedergabe von Mediendatenpaketen des ersten Mediendatenstroms verwendet zu werden, wobei der Quality-of-Experience-Parameter mit einer Menge von beschädigten Videoteilen, wobei Videoteile Videoeinzelbilder umfassen, und/oder beschädigten Audioproben des ersten Mediendatenstroms korreliert, wobei die Menge von beschädigten Videoteilen und/oder beschädigten Audioproben innerhalb eines Zeitabschnitts als Teil der Wiedergabe erzeugt wird;
Anfordern der Übertragung eines zweiten Mediendatenstroms über den verlustbehafteten Übertragungsweg an den Medienclient, falls der Quality-of-Experience-Parameter angibt, dass eine Quality of Experience des wiedergegebenen ersten Mediendatenstroms unter einem zuvor ermittelten Schwellenwert liegt, wobei der zweite Datenstrom eine Version des ersten Mediendatenstroms mit einer niedrigeren Qualität ist; und
Übergehen vom Empfangen von Datenpaketen des ersten Datenstroms zum Empfangen von Datenpaketen des zweiten Mediendatenstroms.

12. Medienwiedergabegerät nach Anspruch 11, wobei die Version des ersten Mediendatenstroms mit einer niedrigeren Qualität aus einer Vielzahl von Qualitätsversionen des Mediendatenstroms ausgewählt wird, sodass die Quality of Experience über den Schwellenwert hinaus angehoben wird.

13. Medienwiedergabegerät nach Anspruch 11 oder 12, wobei das Anfordern der Übertragung eines zweiten Mediendatenstroms Folgendes umfasst:
Verwenden der Datenpaketkorrekturinformationen zum Ermitteln einer geschätzten Quality-of-Experience-Stufe für unterschiedliche Qualitätsversionen des Mediendatenstroms, die dem Medienclient zur Verfügung stehen;
Auswählen der Version des Mediendatenstroms mit einer niedrigeren Qualität basierend auf den geschätzten Quality-of-Experience-Parametern und dem Schwellenwert.

14. Medienwiedergabegerät nach einem der Ansprüche 11-13, wobei das Übergehen vom Empfangen von Datenpaketen des ersten Datenstroms zum Empfangen von Datenpaketen eines zweiten Datenstroms Folgendes umfasst:
Beibehalten der Assoziierung einer ersten Multicast-Gruppe mit dem ersten Mediendatenstrom und Beitreten zu einer zweiten Multicast-Gruppe, die mit dem zweiten Mediendatenstrom assoziiert ist; oder
Abstellen eines ersten Broadcasts des ersten Datenstroms und Einstellen eines zweiten Broadcasts des zweiten Datenstroms.

15. Computerprogrammprodukt, das in einem Speicherbaustein gespeicherte Softwarecodeabschnitte umfasst, wobei die Softwarecodeabschnitte, wenn sie durch einen Prozessor laufen gelassen werden, zum Ausführen der Verfahrensschritte nach einem der Ansprüche 1-10 konfiguriert sind.

## Revendications

1. Procédé de commande de la transmission de données multimédia vers un dispositif de reproduction multimédia, comprenant :
un client multimédia (208) d'un dispositif de reproduction multimédia (112, 207) recevant des paquets multimédias associés à un premier flux multimédia, lesdits paquets multimédias faisant partie d'une transmission effectuée sur une voie de transmission avec pertes vers ledit client multimédia, une voie de transmission de données avec pertes étant une voie de transmission de données sensible au bruit impulsionnel, grâce à quoi au moins une partie desdits paquets multimédias qui sont perdus ou corrompus pendant ladite transmission sont récupérés par un système de réparation de paquets (114),
ledit client multimédia recevant ou déterminant un paramètre de qualité d'expérience associé au dit premier flux multimédia, ledit paramètre de qualité d'expérience étant fondé sur des informations de réparation de paquets, au moins une partie desdites informations de réparation de paquets étant déterminée par ledit client et étant indicative d'une quantité desdits paquets multimédias qui ne sont pas récupérés suffisamment dans les temps par ledit système de réparation de paquets, ledit système de réparation de paquets représentant un schéma de retransmission de paquets, dans le but d'être utilisé dans la reproduction de paquets multimédias dudit premier flux multimédia, ladite qualité du paramètre d'expérience se corrélant avec une quantité de parties vidéo corrompues, les parties vidéo comprenant des trames vidéo et/ou des échantillons audio corrompus dudit premier flux multimédia, ladite quantité de parties vidéo corrompues et/ou d'échantillons audio corrompus étant générée dans un certain intervalle de temps sous forme d'une partie de ladite reproduction,
ledit client multimédia requérant la transmission d'un second flux multimédia sur ladite voie de transmission avec pertes vers ledit client multimédia si ladite qualité du paramètre d'expérience indique que la qualité d'expérience dudit premier flux multimédia reproduit se trouve en dessous d'un seuil prédéterminé, ledit second flux étant une version de qualité inférieure dudit premier flux multimédia, et
ledit client multimédia basculant de la réception de paquets dudit premier flux à la réception de paquets dudit second flux multimédia.

2. Procédé selon la revendication 1, dans lequel un paquet multimédia est associé à une durée programmée de reproduction et dans lequel ladite quantité de parties vidéo corrompues et/ou d'échantillons audio est provoquée par des paquets multimédias corrompus ou perdus qui ne peuvent pas être récupérés par ledit système de réparation de paquets avant la durée programmée de reproduction des paquets multimédias.

3. Procédé selon la revendication 1 ou la revendication 2, dans lequel ledit client multimédia requérant la transmission d'un second flux multimédia comprend :
la sélection de ladite version de qualité inférieure dudit flux multimédia à partir d'une pluralité de versions de qualité dudit flux multimédia de sorte à ce que ladite qualité d'expérience soit relevée au-dessus dudit seuil.

4. Procédé selon l'une quelconque des revendications 1 à 3, dans lequel ledit client multimédia demandant la transmission d'un second flux multimédia comprend :
l'utilisation desdites informations de réparation de paquets pour déterminer un niveau de qualité d'expérience estimé pour différentes versions de qualité du flux multimédia qui sont disponibles au dit client multimédia,
la sélection de ladite version de qualité inférieure du flux multimédia sur la base desdits paramètres estimés de qualité d'expérience et de ladite valeur de seuil.

5. Procédé selon l'une quelconque des revendications 1 à 4, dans lequel ledit premier et/ou ledit second flux multimédia et transmis sur la base d'une technique de transmission de point à multipoint, de préférence une technique de radiodiffusion ou de multidiffusion ; ou bien, sur la base d'une technique de transmission de point à point, de préférence une technique de transmission de diffusion individuelle, plus préférablement une technique de diffusion continue adaptative (au protocole http) vers ledit client multimédia.

6. Procédé selon l'une quelconque des revendications 1 à 5, dans lequel lesdites informations de réparation de paquets comprennent en outre : la quantité de paquets qui a été réparée par ledit système de réparation de paquets ; la quantité de paquets qui n'a pas été réparée par ledit système de réparation de paquets et/ou le nombre de demandes de retransmission envoyées par le client multimédia au dit système de réparation de paquets.

7. Procédé selon l'une quelconque des revendications 1 à 6, dans laquelle ledit paramètre de qualité d'expérience est déterminé par un système de surveillance qui est configuré pour surveiller les informations de réparation de paquets associées au dit client multimédia et, en option, les informations sur le bruit indicatives de bruit (impulsionnel) au niveau d'une ou plusieurs parties de ladite voie de transmission de données avec pertes.

8. Procédé selon la revendication 7, dans lequel ledit système de surveillance exécute un processus de :
détermination dudit paramètre de qualité d'expérience sur la base des informations de réparation de paquets reçues en provenance d'un ou plusieurs agents de surveillance configurés pour surveiller des lignes de données dudit réseau d'accès et/ou mis en oeuvre dans ledit dispositif de reproduction multimédia,
envoi dudit paramètre de qualité d'expérience au client multimédia dans ledit dispositif de reproduction multimédia.

9. Procédé selon l'une quelconque des revendications 1 à 8, dans lequel lesdites informations de réparation de paquets sont transmises au dit système de surveillance dans un ou plusieurs rapports au protocole RTCP et/ou dans lequel ledit paramètre de qualité d'expérience est transmis au dit client multimédia dans un ou plusieurs rapports au protocole RTCP ; et/ou dans lequel les paquets multimédias associés au dit premier flux multimédia, et en option au dit second flux multimédia, sont transmis au dit client multimédia sur la base d'au moins l'un du protocole MPEG, du protocole RTP, du protocole UDP et/ou du protocole IP.

10. Procédé selon l'une quelconque des revendications 1 à 9, dans lequel une technique de lignes d'abonnés numériques (xDSL), de préférence une technique VDSL, VDSL+ ou VDSL2, est utilisée pour transmettre des paquets multimédias sur au moins une partie de ladite voie de transmission avec pertes ; et/ou dans lequel ladite voie de transmission de données avec pertes comprend au moins l'un d'une ligne d'abonné (DSL), d'une ligne de puissance et/ou d'un réseau résidentiel câblé ou sans fil.

11. Dispositif de reproduction multimédia pouvant être connecté à une voie de transmission de données avec pertes, ledit dispositif de reproduction multimédia comprenant :
un support de stockage pouvant être lu par ordinateur comportant un code de programme pouvant être lu par ordinateur associé à un client multimédia intégré à celui-ci et un processeur, de préférence un microprocesseur couplé au support de stockage pouvant être lu par ordinateur, dans lequel, en réponse à l'exécution du code de programme pouvant être lu par ordinateur, le processeur est configuré pour effectuer des opérations exécutables comprenant :
la réception de paquets multimédias associés à un premier flux multimédia, lesdits paquets multimédias étant transmis sur une voie de transmission avec pertes vers ledit client multimédia, une voie de transmission de données avec pertes étant une voie de transmission de données sensible au bruit impulsionnel, et au moins une partie desdits paquets multimédias qui sont perdus ou corrompus pendant ladite transmission sont récupérés par un système de réparation de paquets, ledit système de réparation de paquets représentant un schéma de retransmission de paquets,
la réception ou la détermination d'un paramètre de qualité d'expérience associé au dit premier flux, ledit paramètre de qualité d'expérience étant fondé sur des informations de réparation de paquets, au moins une partie desdites informations de réparation de paquets étant déterminée par ledit client et étant indicative d'une quantité desdits paquets multimédias qui ne sont pas récupérés suffisamment dans les temps par ledit système de réparation de paquets pour être utilisés dans la reproduction de paquets multimédias dudit premier flux multimédia, ladite qualité du paramètre d'expérience se corrélant avec une quantité de parties vidéo corrompues, les parties vidéo comprenant des trames vidéo et/ou des échantillons audio corrompus dudit premier flux multimédia, ladite quantité de parties vidéo corrompues et/ou d'échantillons audio corrompus étant générée dans un certain intervalle de temps sous forme d'une partie de ladite reproduction,
la demande de la transmission d'un second flux multimédia sur ladite voie de transmission avec pertes vers ledit client multimédia si ladite qualité du paramètre d'expérience indique que la qualité d'expérience dudit premier flux multimédia reproduit se trouve en dessous d'un seuil prédéterminé, ledit second flux étant une version de qualité inférieure dudit premier flux multimédia, et
le basculement de la réception de paquets dudit premier flux à la réception de paquets dudit second flux multimédia.

12. Dispositif de reproduction multimédia selon la revendication 11, dans lequel ladite version de qualité inférieure dudit premier flux multimédia est sélectionnée à partir d'une pluralité de versions de qualité dudit flux multimédia de sorte à ce que la qualité d'expérience soit relevée au-dessus dudit seuil.

13. Dispositif de reproduction multimédia selon la revendication 11 ou la revendication 12, dans lequel la demande de la transmission d'un second flux multimédia comprend :
l'utilisations desdites informations de réparation de paquets pour déterminer un niveau estimé de qualité d'expérience pour différentes versions de qualité du flux multimédia qui sont disponibles au dit client multimédia,
la sélection de ladite version de qualité inférieure du flux multimédia sur la base desdits paramètres estimés de qualité d'expérience et de ladite valeur de seuil.

14. Dispositif de reproduction multimédia selon l'une quelconque des revendications 11 à 13, dans lequel le basculement de la réception de paquets dudit premier flux à la réception de paquets d'un second flux comprend :
l'action consistant à laisser un premier groupe de multi diffusion associé au dit premier flux multimédia et la réunion d'un second groupe de multi diffusion associé au dit second flux multimédia, ou
la suppression d'accord d'une première radiodiffusion dudit premier flux et l'accord réalisé dans une seconde radiodiffusion dudit second flux.

15. Produit de programme informatique comprenant des parties de code logiciel stockées dans une mémoire, lesdites parties de code logiciel étant configurées pour réaliser, lorsqu'elles sont exécutées par un processeur, les étapes du procédé de l'une quelconque des revendications 1 à 10.
